# EUROPEAN PATENT SPECIFICATION

(11) **EP 4 489 564 B1**
(45) Date of publication and mention of the grant of the patent: **04.02.2026**
(21) Application number: 23714903.4
(22) Date of filing: 07.03.2023
(51) Int. Cl.: A01K 43/00, A01K 45/00

(54) **EGG TRANSFER ASSEMBLY, AND ASSOCIATED METHOD**
EIERTRANSFERANORDNUNG UND ZUGEHÖRIGES VERFAHREN
ENSEMBLE DE TRANSFERT D'OEUFS ET PROCÉDÉ ASSOCIÉ

(30) Priority: 08.03.2022 US 202263317731 P
(43) Date of publication of application: 15.01.2025
(73) Proprietor: Zoetis Services LLC, Parsippany, NJ 07054 (US)
(72) Inventor: SAMSON, William Douglas, Parsippany, New Jersey 07054 (US)
(74) Representative: Nowak, Marta M.
(86) International application number: PCT/US2023/014703
(87) International publication number: WO 2023/172549

(56) References cited:
- EP-A2- 1 310 164
- CN-U- 213 140 553
- US-A- 3 656 794

## Description

### FIELD

The present disclosure relates to low-vacuum transfer assemblies for transferring eggs, for example, between an incubation tray and a hatching tray.

### BACKGROUND

This section provides background information related to the present disclosure which is not necessarily prior art. EP 1310164 A2 and CN 213 140 553 U each discloses a pneumatically operated egg injection machine and a method.

The production of poultry commonly includes placing fertile eggs in an incubating tray and placing the incubating tray in an incubator (or setter machine) having a selected temperature for a period of time (for example, to mimic natural cycles). After the period of time, the eggs are subjected to selection processes and *in-ovo* processes, which have become effective means for disease prevention in avian Bocks, and includes introducing antimicrobials (e.g., antibiotics, bactericides, and Sulfonamides), vitamins, enzymes, nutrients, organic salts, hormones, adjuvants, immune Stimulators, probiotics, vaccines. *In-ovo* processes often include passing a needle through the eggshell. The injected eggs are eventually transferred to a hatching tray or basket, which are placed in hatches (or hatching machines). Common transferring assemblies use vacuum or suction cups to transfer eggs from the incubating tray to the hatching tray. In the instance of injected eggs, however, the applied vacuum or suction is often a source of contamination, for example, by causing small particles to move near the needle perforations. Accordingly, it would be desirable to develop transferring assemblies that reduce and limit contamination risks, as well as, cracks and fissures.

The above and other needs are met by aspects of the present disclosure which, according to one aspect, provides a transfer assembly in accordance with claim 1, including a distribution plate having a first surface and a second surface, wherein the first surface has at least one projection extending therefrom. At least one egg picking pad is coupled to the at least one projection, wherein a throughhole extends through the distribution plate, the at least one projection and the at least one egg picking pad. A flexible bellows is coupled to the second surface of the distribution plate.

Another aspect provides a method of transporting eggs in accordance with claim 6. The method includes descending a transfer assembly to interact with an egg, the transfer assembly having at least one egg pick pad. The method further includes contacting the egg picking pad with the egg and applying a vacuum at the egg picking pad such that the transfer assembly is capable of ascending with the egg for transporting thereof.

Thus, various aspects of the present disclosure provide advantages, as otherwise detailed herein.

### DRAWINGS

The drawings described herein are for illustrative purposes only of selected embodiments and not all possible implementations, and are not intended to limit the scope of the present disclosure.
FIG. 1 is a bottom-up perspective view of an example egg transfer assembly, including a distribution plate connecting a bellow and one or more egg picking pads, in accordance with various aspects of the present disclosure;
FIG. 2A is a bottom-up perspective view of an example distribution plate (for example, as used in example egg transfer assembly illustrated FIG. 1) in accordance with various aspects of the present disclosure;
FIG. 2B is a top-down perspective view of the example distribution plate illustrated in FIG. 2A;
FIG. 3 is a cross-sectional perspective view of the example egg transfer assembly illustrated in FIG. 1;
FIG. 4 is a top-down perspective view of the example egg transfer assembly illustrated in FIG. 1, where the bellow is in an extend state (for example, for upon initial contact or release);
FIG. 5A is a bottom-up perspective view of an example egg pick pad in accordance with various aspects of the present disclosure;
FIG. 5B is a top-down perspective view of the example egg pick pad illustrated in FIG. 5A;
FIG. 6 is an enlarged view of a first end of the example egg transfer assembly illustrated in FIG. 1;
FIG. 7 is a side view of the example egg transfer assembly illustrated in FIG. 1;
FIG. 8 is an exploded perspective view of the example egg transfer assembly illustrated in FTG. 1;
FIG. 9 is a top-down perspective view of the example egg transfer assembly illustrated in FIG. 1, where the bellow is in a compressed state (for example, during transfer);
FIG. 10 is a top-down perspective view of the example egg transfer assembly illustrated in FIG. 1; and
FIG. 11 is a cross-sectional perspective view of the example egg transfer assembly illustrated in FIG. 1, where a distal end of the bellow includes a bellows fitting.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The present disclosure provides transfer assemblies that are configured to transfer eggs, for example, between an incubation tray and a hatching tray, and more particularly, to transfer eggs having one or more needle perforations. In particular, transfer assemblies prepared in accordance with various aspects of the present disclosure are configured such that the transfer assembly contacts the egg at one or more locations that are separate (or away) from the one or more needle perforations. Further still, in various aspects, transfer assemblies prepared in accordance with various aspects of the present disclosure may be low-vacuum transfer assemblies.

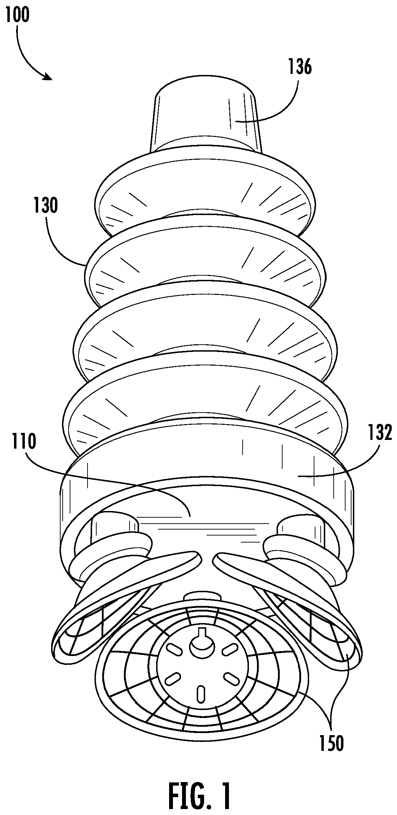

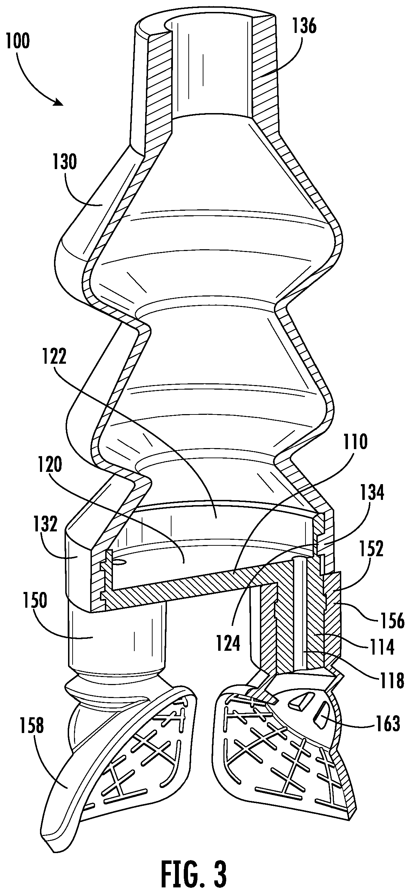

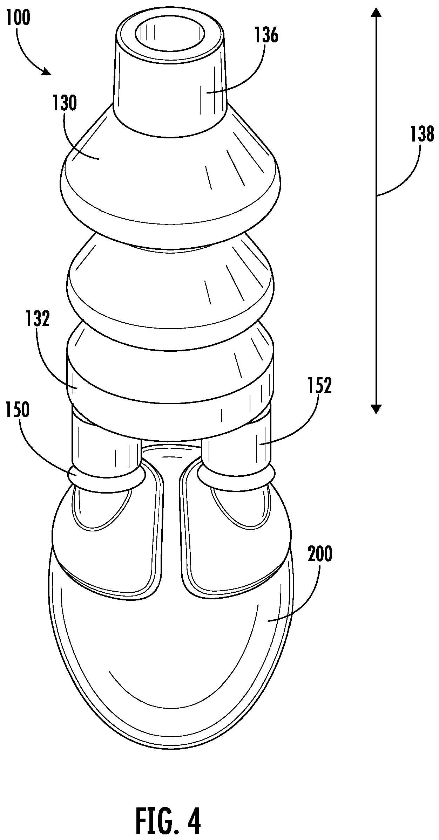

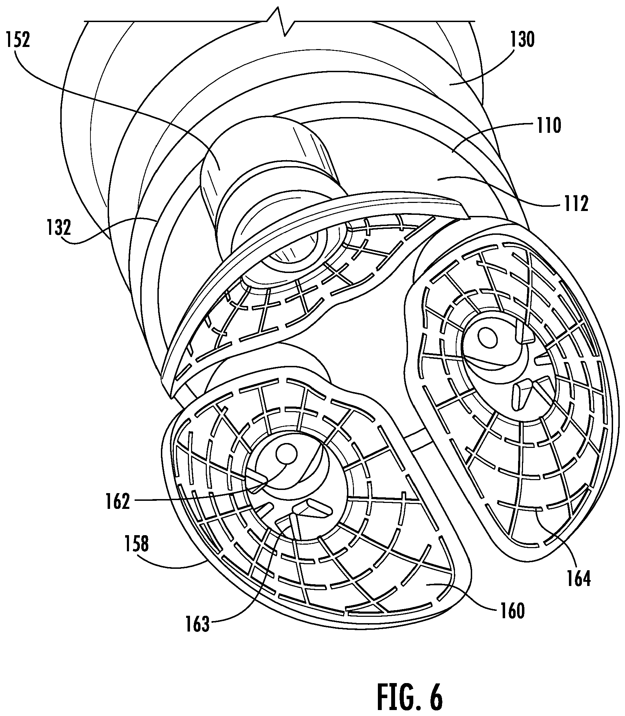

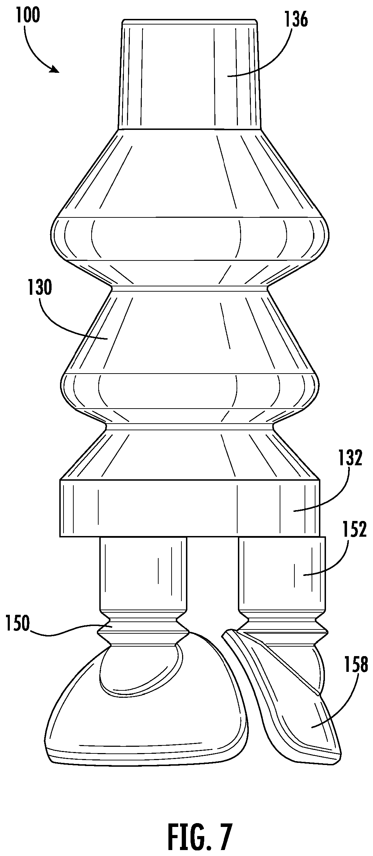

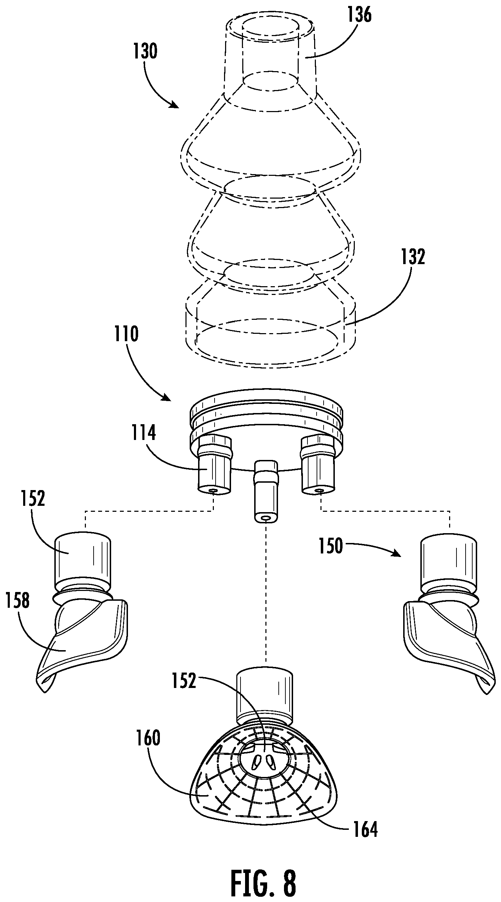

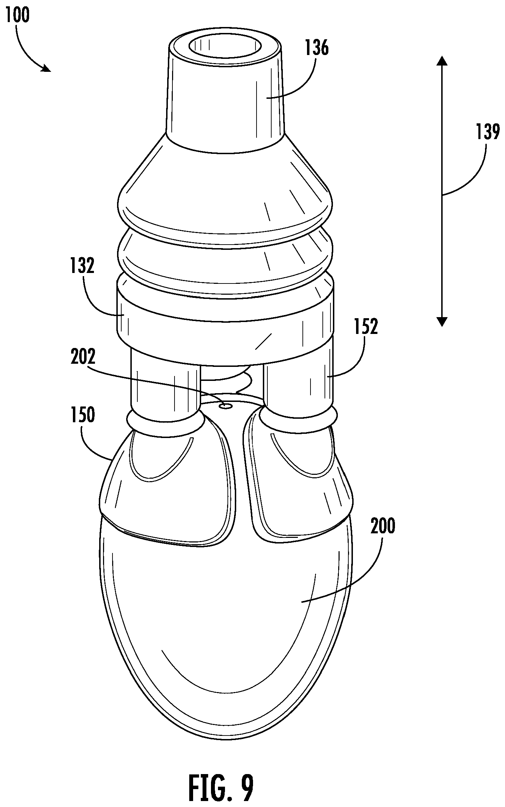

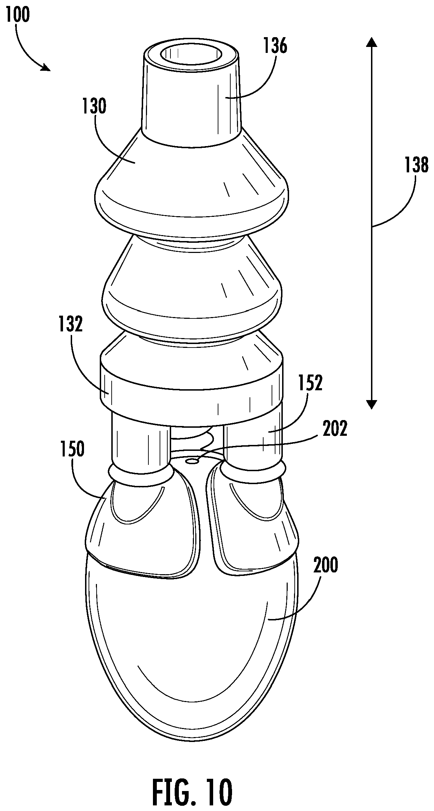

FIGS. 1, 3-4, and 6-8 depict an example transfer assembly 100 having, as illustrated, a distribution plate 110 connecting a bellows 130 and one or more egg picking pads 150. For example, FIG. 1 is a bottom-up perspective view of an example egg transfer assembly 100; FIG 3 is a cross-sectional perspective view of the egg transfer assembly 100; FIG. 4 is a top-down perspective view of the egg transfer assembly 100 in use; FIG. 6 is an enlarged view of a first end of the egg transfer assembly 100; FIG. 7 is a side view of the egg transfer assembly 100; FIG. 8 is an exploded perspective view of the egg transfer assembly 100; FIG. 9 is another top-down perspective view of the example egg transfer assembly 10; FIG. 10 is another top-down perspective view of the egg transfer assembly 100 in use.

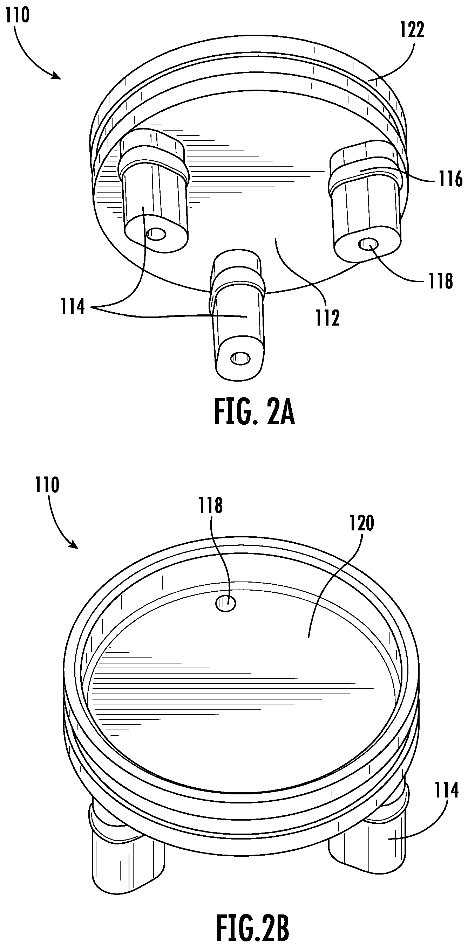

As best illustrated in FIGS. 2A and 2B, the distribution plate (or manifold) 110 has a first side (or surface) 112 and a second side (or surface) 120. The first surface 112 may be substantially parallel with the second surface 120. One or more projections (or studs or posts or poles or columns or extruded bosses) 114 extend in a first direction from the first surface 112 of the distribution plate 110. In certain variations, the distribution plate 110 may be circular and the one or more projections may be evenly spaced on the distribution plate 110.

Each projection 114 is configured to hold (or be coupled to) an egg picking pad 150. As illustrated, the distribution plate 110 may include three projections 114, and the transfer assembly 100 may include three corresponding egg picking pads 150. The skilled artisan will recognize, however, that in various aspects, the distribution plate 110 may include three or fewer projections 114, and the transfer assembly 100 may include three or fewer egg picking pads 150. Likewise, the skilled artisan will understand that in still other variations, the distribution plate 110 may include three or more projections 114, and the transfer assembly 100 may include three or more egg picking pads 150. Further still, although distinct egg picking pads 150 are illustrated, the skilled artisan will understand that in certain variations, the one or more egg picking pads 150 may be connected. Moreover, the skilled artisan will recognize that the projections 114 and the egg picking pads 150 may be distributed in a variety of patterns, for example, so as to readily accommodate different egg types, shapes, or sizes.

In each variation, each of the projections 114 include one or more ridges or tabs or the like 116 configured to hold the egg picking pad 150 and, as best illustrated in FIG. 3, a vacuum port (or channel or throughhole) 118 that extends through both the projection 114 and the distribution plate 110, exiting the second surface 120. The projection 114 defines the vacuum port 118 as a central cavity extending centrally through the length thereof. The second surface 120 of the distribution plate 110 is configured to be coupleable to the bellows 130. As illustrated, a lip or ridge 122 may extend in a second direction from the second surface 120, and a first end 132 of the bellows 130 may be configured to fit over (or surround) the lip or ridge 122. For example, as best illustrated in FIG. 3, one or more couplers (e.g., ridges) 134 may extend from an interior surface of the bellows 130 at the first end 132, and an exterior surface of the lip 122 may have a one or more recesses 124 configured to receive the couplers 134. The skilled artisan will recognize that, although not illustrated, other coupling configurations could be similarly employed.

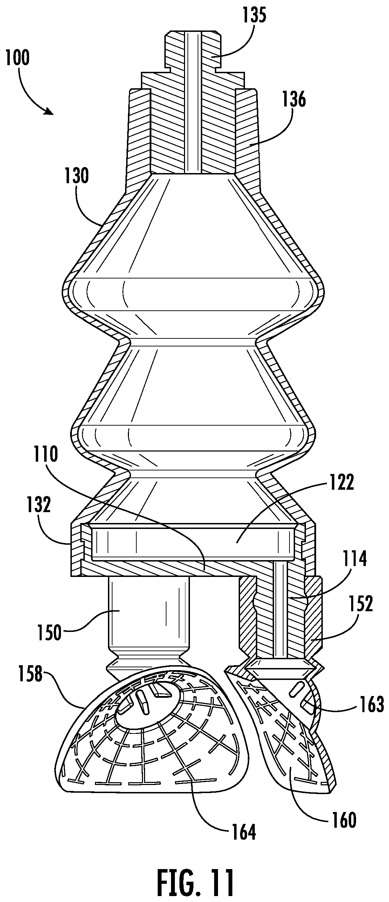

In each variation, the bellows 130 has a second end 136 configured to be coupled to a vacuum source (not shown). As illustrated in FIG. 11, the second end 136 of the bellows 130 may include a bellows fitting 135 that couples the bellows 130 to the vacuum source. As illustrated, a length of the bellows extending between the first end 132 and the second end 136 may have an accordion-like structure. For example, in various aspects, the bellows 130 is configured to collapse vertically under negative pressure (for example, by about 1 inch or 25.4 mm) and to recover original length when vacuum pressure ceases to be applied (or stops). In certain variations, the bellows 130 may be a flexible vacuum bellows made of a flexible plastic, rubber, or other elastomeric material.

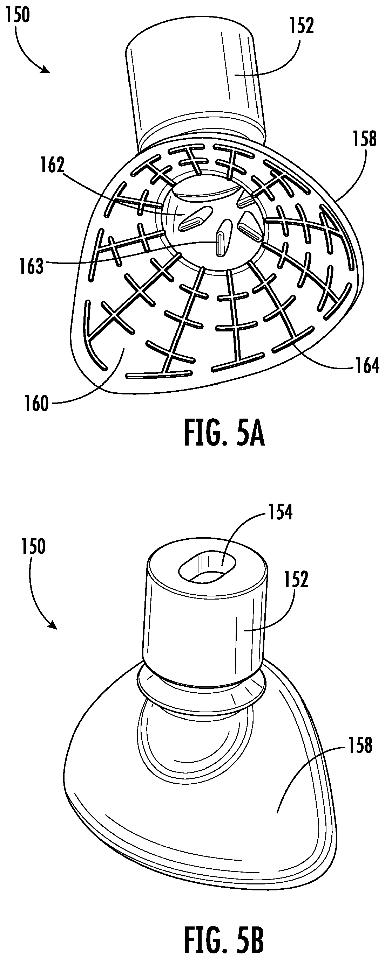

As best illustrated in FIG. 3, each of the one or more egg picking pads 150 has a sleeve 152 configured to receive the one or more projections 114 extending from the distribution plate HO. For example, as illustrated in FIG. 5B, the sleeve 152 may define cavity (or keyed hole) 154 configured to receive the projection 114. More specifically, an interior surface of the sleeve 152 defining the cavity 154 may have one or more recesses 156 configured to receive the ridges 116 extending from an exterior surface of the projection 114.

The sleeve 152 of each egg picking pad 150 is coupled to (for example, at an angle) an egg contact pad 158 that is configured to contact an egg 200 (for example, as illustrated in FIGS. 4 and 9). The egg contact pad 158 is contoured to have a shape receptive to the egg 200. For example, in certain variations, as illustrated, the egg contact pad 158 may have a general spherical shape. The one or more egg picking pads 150 work together to provide a gentle, but robust grip on the egg 200. More particularly, the flexibility of the bellows 130 permit the one or more egg picking pads 150 to be used for eggs having a variety of different shapes and sizes. For example, the flexibility of the bellows 130 permits the one or more picking pads 150 to be used for a variety of eggs disposed in a setting (or hatching) tray and having different heights as a result of different in shape and sizes. The flexibility of the bellows 130 also permit the transfer assembly 100 to gently release eggs 200 as the bellows 130 adjusts depending on the shape and size of the egg 200, and also, the disposing surface.

As best illustrated in FIGS 5A and 6, an interior-facing surface of the egg contact pad 158 has a peripheral surface 160 surrounding a vacuum conduit 162. In certain variations, one or more structural supports 163 may be disposed towards an entrance (or first end) of the vacuum conduit 162. In certain variations, the first end of the vacuum conduit 162 may have a dome shape that defines the angle connecting the sleeve 152 and egg contact pad 158. The structural supports 163 may prevent collapse and/or obstruction of the vacuum conduit 162.

In each variation, the vacuum conduit 162 is configured to be in communication with the vacuum port 118 of the projection 114 and distribution plate 110, which in tum is in communication with the bellows 130 and the vacuum source that may be connected thereto. In this manner, vacuum suction may be used to grab and hold the egg 200. For example, when the transfer assembly 100 contacts an egg, the bellows 130 may collapse (or compress) adjusting height 139 (for example, as illustrated in FIG. 9) depending on the size and shape of the egg 200. Upon contact, vacuum pressure is applied and retains the egg 200 against the peripheral surface 160 closing the air path to the bellows 130.

The peripheral surface 160 of the egg contact pad 158 includes a plurality of section grooves 164. In certain variations, the section grooves 164 may be imprints in the peripheral surface 160. The section grooves 164 may have a variety of configurations. For example, as illustrated, the section grooves 164 may have a concentric design. In each variation, the section grooves 164 help to improve the grip of the routing vacuum on the peripheral surface 160. That is, the section groves 164 provide a vacuum path to areas away from the vacuum conduit 162, increasing the vacuum force available to hold the egg 200 in predetermined and isolated areas. The section grooves 164 originate at the vacuum conduit 162 and extend towards a peripheral of the egg contact pad 158, including branching laterally, but without connection to adjacent grooves. In this manner, each section groove 164 defines an isolated sub-system and a unique vacuum path. The placement of the one or more egg contact pads 158, and notably, the vacuum conduits 162 and section grooves 164 defined therein, isolates applied vacuum or suction power to predetermined (or designated) areas, thereby limiting movement near or around needle perforations 202 in the egg 200, as illustrated in FIGS. 9 and 10. The egg may be released from the peripheral surface 160 by interrupting the applied vacuum pressure causing the bellows 130 to extend (for example, as illustrated in FIGS. 4 and 10), recovering its original length 138, and thereby lowering the egg to touch a receiving surface (for example, a hatching basket).

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the

## Claims

1. A transfer assembly (100) for transporting eggs (200), comprising:
a distribution plate (110) having a first surface (112) and a second surface (120);
a projection (114) extending from the first surface (112) and defining a throughhole (118) that extends through the distribution plate (110);
an egg picking pad (150) coupled to the projection (114), wherein the throughhole (118) extends through the projection (114) so as to be in fluid communication with the egg picking pad (150); and
a flexible bellows (130) coupled to the second surface (120) of the distribution plate (110),
**characterized in that**
the egg picking pad (150) has an egg contact pad (158) having a peripheral surface (160) surrounding the throughhole (118), the peripheral surface (160) defining a plurality of section grooves (164) that originate at the throughhole (118) and extend toward a periphery of the egg contact pad (158) without connection to adjacent grooves, wherein each section groove (164) defines an isolated vacuum path.

2. The transfer assembly (100) of claim 1, wherein the egg picking pad (150) comprises a sleeve (152) that is configured to surround the projection (114).

3. The transfer assembly (100) of claim 2, wherein the egg contact pad (158) is a spherical egg contact pad.

4. The transfer assembly (100) of claim 1, wherein the throughhole (118) defines a channel configured to be in fluid communication with a vacuum source.

5. The transfer assembly (100) of claim 1, wherein a lip (122) extends from the second surface (120) and, when coupled to the distribution plate (110), the flexible bellows (130) surrounds the lip (122).

6. A method of transporting eggs (200), the method comprising:
descending a transfer assembly (100) to interact with an egg (200), the transfer assembly (100) comprising:
a distribution plate (110) having a first surface (112) and a second surface (120);
a projection (114) extending from the first surface (112) and defining a throughhole (118) that extends through the distribution plate (110);
an egg picking pad (150) coupled to the projection (114), the egg picking pad (150) has an egg contact pad (158) having a peripheral surface (160) surrounding the throughhole (118), the peripheral surface (160) defining a plurality of section grooves (164) that originate at the throughhole (118) and extend toward a periphery of the egg contact pad (158) without connection to adjacent grooves, wherein each section groove (164) defines an isolated vacuum path; and
a flexible bellows (130) coupled to the second surface (120) of the distribution plate (110);
contacting the at least one egg picking pad (150) with the egg (200);
applying a vacuum via the throughhole (118), wherein suction is applied through the section grooves (164); and
ascending the transfer assembly (100) so as to transport the egg (200).

## Patentansprüche

1. Transfervorrichtung (100) zum Transportieren von Eiern (200), umfassend:
eine Verteilerplatte (110) mit einer ersten Oberfläche (112) und einer zweiten Oberfläche (120);
einen Vorsprung (114), der sich von der ersten Oberfläche (112) erstreckt und ein Durchgangsloch (118) definiert, das sich durch die Verteilerplatte (110) erstreckt;
ein Eieraufnahmepolster (150), das mit dem Vorsprung (114) verbunden ist, wobei sich das Durchgangsloch (118) durch den Vorsprung (114) erstreckt, so dass es in Fluidverbindung mit dem Eieraufnahmepolster (150) steht; und
einen flexiblen Balg (130), der mit der zweiten Oberfläche (120) der Verteilerplatte (110) verbunden ist,
**dadurch gekennzeichnet, dass**
das Eieraufnahmepolster (150) ein Eierkontaktpolster (158) mit einer Umfangsfläche (160) aufweist, die das Durchgangsloch (118) umgibt, wobei die Umfangsfläche (160) eine Vielzahl von Abschnittsrillen (164) definiert, die von dem Durchgangsloch (118) ausgehen und in Richtung eines Umfangs des Eierkontaktpolsters (158) verlaufen, ohne mit benachbarten Rillen verbunden zu sein, wobei jede Abschnittsrille (164) einen isolierten Vakuumweg definiert.

2. Transfervorrichtung (100) nach Anspruch 1, wobei das Eieraufnahmepolster (150) eine Hülse (152) umfasst, die so konfiguriert ist, dass sie den Vorsprung (114) umgibt.

3. Transfervorrichtung (100) nach Anspruch 2, wobei das Eierkontaktpolster (158) ein kugelförmiges Eierkontaktpolster ist.

4. Transfervorrichtung (100) nach Anspruch 1, wobei das Durchgangsloch (118) einen Kanal definiert, der so konfiguriert ist, dass er in Fluidverbindung mit einer Vakuumquelle steht.

5. Transfervorrichtung (100) nach Anspruch 1, wobei sich eine Lippe (122) von der zweiten Oberfläche (120) erstreckt und, wenn sie mit der Verteilerplatte (110) verbunden ist, der flexible Balg (130) die Lippe (122) umgibt.

6. Verfahren zum Transportieren von Eiern (200), wobei das Verfahren umfasst:
Absenken einer Transfervorrichtung (100), um mit einem Ei (200) in Wechselwirkung zu treten, wobei die Transfervorrichtung (100) umfasst:
eine Verteilerplatte (110) mit einer ersten Oberfläche (112) und einer zweiten Oberfläche (120);
einen Vorsprung (114), der sich von der ersten Oberfläche (112) erstreckt und ein Durchgangsloch (118) definiert, das sich durch die Verteilerplatte (110) erstreckt;
ein Eieraufnahmepolster (150), das mit dem Vorsprung (114) verbunden ist, wobei das Eieraufnahmepolster (150) ein Eierkontaktpolster (158) mit einer Umfangsfläche (160) aufweist, die das Durchgangsloch (118) umgibt, wobei die Umfangsfläche (160) eine Vielzahl von Abschnittsrillen (164) definiert, die am Durchgangsloch (118) beginnen und sich in Richtung eines Umfangs des Eierkontaktpolsters (158) erstrecken, ohne mit benachbarten Rillen verbunden zu sein, wobei jede Abschnittsrille (164) einen isolierten Vakuumweg definiert; und
einen flexiblen Balg (130), der mit der zweiten Oberfläche (120) der Verteilerplatte (110) verbunden ist;
Kontaktieren des mindestens einen Eieraufnahmepolster (150) mit dem Ei (200);
Anlegen eines Vakuums über das Durchgangsloch (118), wobei die Saugkraft über die Abschnittsrillen (164) angelegt wird; und
Anheben der Transfervorrichtung (100), um das Ei (200) zu transportieren.

## Revendications

1. Ensemble de transfert (100) pour transporter des œufs (200), comprenant :
une plaque de distribution (110) ayant une première surface (112) et une seconde surface (120) ;
une saillie (114) s'étendant à partir de la première surface (112) et définissant un trou traversant (118) qui s'étend à travers la plaque de distribution (110) ;
un patin de prélèvement d'œuf (150) couplé à la saillie (114), dans lequel le trou traversant (118) s'étend à travers la saillie (114) de manière à être en communication fluidique avec le patin de prélèvement d'œuf (150) ; et
un soufflet flexible (130) couplé à la seconde surface (120) de la plaque de distribution (110),
**caractérisé en ce que**
le patin de prélèvement d'œuf (150) comprend un patin de contact d'œuf (158) ayant une surface périphérique (160) entourant le trou traversant (118), la surface périphérique (160) définissant une pluralité de rainures de section (164) qui prennent naissance au trou traversant (118) et s'étendent vers une périphérie du patin de contact d'œuf (158) sans connexion avec des rainures adjacentes, dans lequel chaque rainure de section (164) définit un chemin à vide isolé.

2. Ensemble de transfert (100) selon la revendication 1, dans lequel le patin de prélèvement d'œuf (150) comprend un manchon (152) qui est configuré pour entourer la saillie (114).

3. Ensemble de transfert (100) selon la revendication 2, dans lequel le patin de contact d'œuf (158) est un patin sphérique de contact d'œuf.

4. Ensemble de transfert (100) selon la revendication 1, dans lequel le trou traversant (118) définit un canal configuré pour être en communication fluidique avec une source de vide.

5. Ensemble de transfert (100) selon la revendication 1, dans lequel une lèvre (122) s'étend à partir de la seconde surface (120) et, lorsqu'il est couplé à la plaque de distribution (110), le soufflet flexible (130) entoure la lèvre (122).

6. Procédé de transport d'œufs (200), le procédé comprenant :
abaisser un ensemble de transfert (100) pour interagir avec un œuf (200), l'ensemble de transfert (100) comprenant :
une plaque de distribution (110) ayant une première surface (112) et une seconde surface (120) ;
une saillie (114) s'étendant à partir de la première surface (112) et définissant un trou traversant (118) qui s'étend à travers la plaque de distribution (110) ;
un patin de prélèvement d'œuf (150) couplé à la saillie (114), le patin de prélèvement d'œuf (150) comprend un patin de contact d'œuf (158) ayant une surface périphérique (160) entourant le trou traversant (118), la surface périphérique (160) définissant une pluralité de rainures de section (164) qui prennent naissance au trou traversant (118) et s'étendent vers une périphérie du patin de contact d'œuf (158) sans connexion avec des rainures adjacentes, dans lequel chaque rainure de section (164) définit un chemin à vide isolé ; et
un soufflet flexible (130) couplé à la seconde surface (120) de la plaque de distribution (110) ;
mettre en contact ledit au moins un patin de prélèvement d'œuf (150) avec l'œuf (200) ;
appliquer un vide via le trou traversant (118), dans lequel une aspiration est appliquée à travers les rainures de section (164) ; et
soulever l'ensemble de transfert (100) afin de transporter l'œuf (200).
